# EUROPEAN PATENT APPLICATION

(11) **EP 2 140 961 A1**
(43) Date of publication of application: **06.01.2010**
(21) Application number: 09162848.7
(22) Date of filing: 16.06.2009
(51) Int. Cl.: B23D 49/16, B23D 59/00, D05B 79/00

(54) **Machine with UV Illumination**

(30) Priority: 01.07.2008 US 166089; 25.11.2008 US 277953
(71) Applicant: Black & Decker, Inc., Newark, DE 19711 (US)
(72) Inventor: Munn, Jennifer, Baltimore, MD 21231 (US); Campbell, David Charles, Bel Air, MD 21014 (US); Lombardo, Rachel, Parkton, MD 21120 (US)
(74) Representative: Bell, Ian Stephen

(57) **Abstract**

A machine (10,110,210,310,410) according to the present teachings includes a machine housing (12,112,312,412) and a drive mechanism (14,314,414) disposed in the machine housing and driving an output member (40,340,440). An input member (32,332,432) is associated with the machine housing for activating the drive mechanism. A working member (42,342,442) is driven by the output member. A light source is coupled to the machine housing that projects UV light onto an area proximate to the working member. According to additional features, the light source can comprise a UV light source. According to other features, the light source can collectively define a light emitting device and a filter. The filter can allow black light to pass therethrough. The light emitting device can comprise an incandescent bulb, a light emitting diode, or a fluorescent bulb according to various examples.

## Description

This application is a continuation-in-part of United States Patent Application No. 12/166,089 filed on July 1, 2008. The entire disclosure of the above application is incorporated herein by reference.

The present teachings relate to machines and more particularly relate to a machine having a UV light source for illuminating markings on a workpiece.

This section provides background information related to the present disclosure which is not necessarily prior art.

Machines are provided in many varieties, such as handheld power tools for example that can be used to manipulate (such as cut) a workpiece (i.e., a jigsaw, rotary tool, circular saw, grinder, etc.). Other machines can include sewing machines or other machines that are used to manipulate a workpiece (i.e., sew or employ stitching with a thread to a material such as fabric, or leather for example). It is appreciated that manipulating a workpiece can include joining multiple workpieces together. In some instances, prior to performing a manipulating operation, a user may mark onto a workpiece with a writing instrument a desired working path. The working path can then be followed by the working member (i.e., saw blade, bit, needle, etc.). Sometimes, it may be difficult for a user to effectively view such markings while performing a cutting operation (or other material working operation, such as joining, sewing, grinding and drilling for example) on the workpiece. Furthermore, while many examples require a working path along a straight line, some applications may require a working path (such as a cutting path or joining path) that defines curves or other non-linear shapes.

This section provides a general summary of the disclosure, and is not a comprehensive disclosure of its full scope or all of its features.

A machine according to the present teachings can include a machine housing and a drive mechanism disposed in the machine housing and driving an output member. An input member can be associated with the machine housing for activating the drive mechanism. A working member can be driven by the output member. A light source can be coupled to the machine housing that projects UV light onto an area proximate to the working member.

According to additional features, the light source can comprise a UV light source. According to other features, the light source can collectively define a light emitting device and a filter. The filter can allow black light to pass therethrough. The light emitting device can comprise an incandescent bulb, a light emitting diode, or a fluorescent bulb according to various examples.

A writing instrument can be operable to place markings onto a workpiece. The markings can correspond to a working pattern. The UV light can illuminate the working pattern relative to the area proximate to the working member. The light source according to one example can be disposed on the machine housing generally proximate to the working member.

The light source can be powered by a power source that is internal to the machine housing. In other features, the light source can be powered by a common power source as the drive mechanism. The machine can further comprise a switch that selectively electrically connects the light source to the common power source. The light source can be disposed in a light housing that is portable and comprises an internal power source.

In one example, the machine can comprise a sewing machine. The working member can comprise a needle. The input member can comprise a foot pedal. In other features, the machine can comprise one of a rotary tool, a grinder, a circular saw and a jigsaw. According to one example, the drive mechanism can be hand driven.

A method of manipulating a workpiece with a machine can include marking a pattern onto the workpiece with a writing instrument. A UV light source associated with the workpiece can be activated. The UV light source can emit light that makes the markings of the pattern appear optically brighter relative to the surrounding areas of the workpiece in range of the emitted light. The workpiece can be manipulated with a working member on the machine while directing the working member substantially along the markings. The working member can include a needle. Manipulating the workpiece can include repeatedly passing the needle through the workpiece to secure a flexible member carried by the needle substantially along the markings.

Further areas of applicability will become apparent from the description provided herein. The description and specific examples in this summary are intended for purposes of illustration only and are not intended to limit the scope of the present disclosure.

The drawings described herein are for illustrative purposes only of selected embodiments and not all possible implementations, and are not intended to limit the scope of the present disclosure.
Fig. 1 is a front perspective view of an exemplary power hand tool having a UV light source according to one example of the present teachings;
Fig. 2 is a perspective view of an exemplary workpiece having markings drawn on it by a writing instrument;
Fig. 3 is a partial side perspective view of the power hand tool of Fig. 1 and shown cutting through the workpiece of Fig. 2 along the marking lines while the UV light illuminates the markings;
Fig. 4 is an exemplary schematic view of a power tool constructed in accordance to additional features of the present teachings;
Fig. 5 is an exemplary schematic view of a power tool constructed in accordance to the present teachings and cooperating with a portable UV light source;
Fig. 6 is an exemplary schematic view of a machine constructed in accordance to various examples of the present teachings;
Fig. 7 is a front perspective view of an exemplary sewing machine having a light source according to one example of the present teachings;
Fig. 8 is a partial side perspective view of the machine of Fig. 7 and shown performing a sewing stitch through an exemplary workpiece along the marking lines while the light source illuminates the markings; and
Fig. 9 is a side perspective view of a light source according to additional features of the present teachings and including a light emitting member and a film.

Corresponding reference numerals indicate corresponding parts throughout the several views of the drawings.

The following description is merely exemplary in nature and is not intended to limit the present teachings, their application or uses. It should be understood that throughout the drawings, corresponding reference numerals can indicate like or corresponding parts and features.

Moreover, certain terminology can be used for the purpose of reference only and do not limit the present teachings. For example, terms such as "upper," "lower," "above" and "below" can refer to directions in the drawings to which reference is made. Terms such as "front," "back," "rear" and "side" can describe the orientation of portions of the component, function, system, etc. within a consistent but arbitrary frame of reference which can be made more clear by reference to the text and the associated drawings describing the component, function, system, etc. under discussion. Such terminology may include the words specifically mentioned above, derivatives thereof and words of similar import. Similarly, the terms "first," "second" and other such numerical terms referring to structures, systems and/or methods do not imply a sequence or order unless clearly indicated by the context.

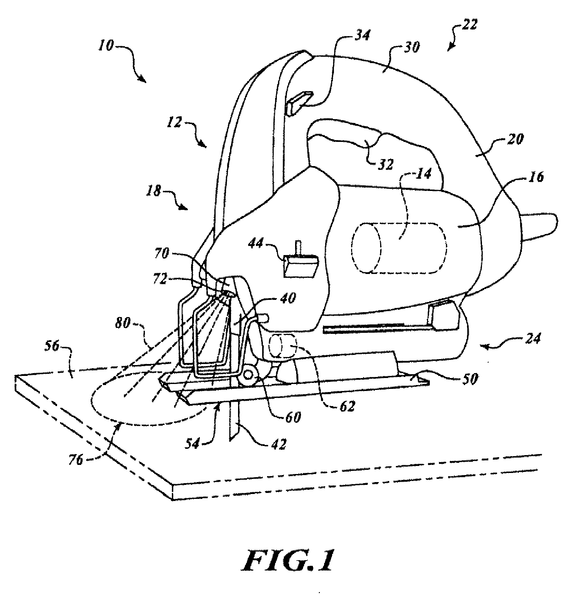

With initial reference to Fig. 1, a power tool constructed in accordance with the present teachings is shown and generally identified at reference numeral 10. The power tool 10 can generally comprise a housing 12 containing a motor 14. The housing 12 can generally comprise a main body 16, a front portion 18, a rear portion 20, an upper portion 22 and a lower portion 24. In one example, the upper portion 22 can define a handle 30 having a trigger assembly 32. A power switch 34 can be provided on the upper portion 22 of the tool 10.

When activated by the trigger assembly 32, the motor 14 can provide a reciprocating and/or pendulum motion to an output member, such as a cutting blade holder 40, on an end of a reciprocating shaft to drive a cutting blade 42. A control member 44 can be provided on the main body 16 of the housing 12. In one example, the control member 44 can control a rate of reciprocation and/or a magnitude of a pendulum motion of the cutting blade 42.

While the handheld power tool 10 is represented in the figures as a jigsaw, the teachings of the present disclosure are also applicable to other handheld power tools, such as, but not limited to, circulating saws, reciprocating saws, scroll saws, miter saw, band saws, portable band saws, rotary tools, cut-out tools, drills, routers, grinders, or any other tool in which an illumination of an area or path would assist the user in seeing a cutting or working line. As will be discussed in greater detail, the present teachings are applicable to machines in general or any device where following a path is recommended during use.

A shoe member 50 can be coupled to the lower portion 24 of the housing 12. During use, a bottom surface 54 of the shoe member 50 can abut a workpiece 56, which can be wood, plastic, metal, other suitable materials and one or more combinations thereof and can be in the form of pipe, sheet material, stock material, other suitable forms and/or materials and one or more combinations thereof. The handheld power tool 10 can further comprise a rolling blade guide 60 that can guide the blade 42 during reciprocating motion. A dust blower 62 can be disposed in the housing 12, such as near the lower portion 24. The dust blower 62 can be configured to blow air onto the workpiece 56 in a direction generally proximate to the cutting area of the blade 42 to disperse debris from the workpiece 56 at an area adjacent to the blade 42.

The handheld power tool 10 can further comprise a light source 70 having a light outlet 72. In one example, the light source 70 can be disposed generally on the front portion 18 of the housing 12. The light source 70 according to the present teachings can comprise an ultraviolet (UV) light. The UV light can be in the form of a bulb, a light-emitting diode (LED), or other forms. In one example, the UV light source 70 can include a black light. The light source 70 can be configured to shine light out of the light outlet 72 and onto a work area 76 of the workpiece 56. In one example, the light source 70 can emit a generally wide beam 80 of UV light onto the work area 76 of the workpiece 56. As will become appreciated from the following discussion, the light source 70 can emit the beam 80 onto the work area 76 of the workpiece 56 to illuminate markings drawn by the user onto the workpiece 56 that identify an area of interest such as a desired cut pattern for example.

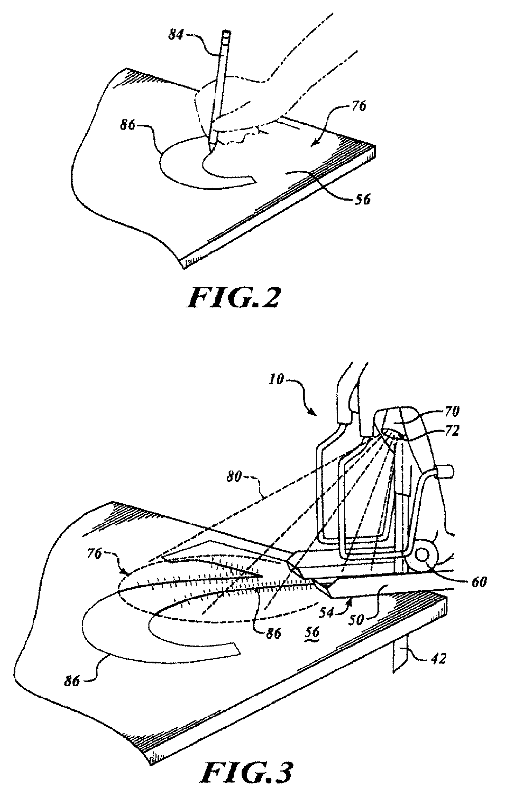

With continual reference to Fig. 1 and additional reference now to Figs. 2 and 3, the handheld power tool 10 and an exemplary method of using the handheld power tool 10 will be described in greater detail. A writing instrument 84 can be provided for drawing markings 86 onto the workpiece 56. According to various examples, a writing instrument 84 can comprise any writing tool that can mark a workpiece, such as a highlighter, a pencil, a pen, a marker, or other writing tool. According to various examples, the pencil can comprise a graphite pencil, a charcoal pencil, a crayon, a grease pencil, or other variety of pencil. The highlighter, according to various examples, can comprise any color, such as yellow for example. In this way, a user can draw the markings 86 onto the workpiece 56 to identify a desired line of cut.

As can be appreciated, in some examples, it may be desirable to cut along a curved cutting path (such as shown in Fig. 2). According to one advantage of the present teachings, the light source 70 can be adapted to transmit UV light onto the surrounding work area 76 rather than simply project a line of light, such as provided by a laser, for example. By shining on an area, the UV light can shine on markings that are within the work area 76.

As shown in Fig. 3, the handheld power tool 10 is shown cutting the workpiece 56 along the marking 86. The beam 80 of the light source 70 illuminates the markings 86 by way of the UV light. In one example, the UV light can transmit radiation prompting visible effects of fluorescence and phosphorescence. More specifically, the beam 80 of UV light illuminates the markings 86 relative to the surrounding work area 76 to make the markings easily visible by the user. As can be appreciated by those skilled in the art that while the UV light may be projected onto the work area 76 of the workpiece 56, the work area 76 does not necessarily illuminate as would be the case with a conventional incandescent (or other) light bulb. Instead, the UV light will cause the markings 86 to illuminate significantly relative to the remainder of the work area 76 (i.e., areas without the markings 86 but within the work area 76). Also, as can be appreciated, the beam 80 of UV light can effectively illuminate a curved path of the markings 86, such that a user can effectively anticipate movements of the tool 10 as the user cuts through the workpiece 56.

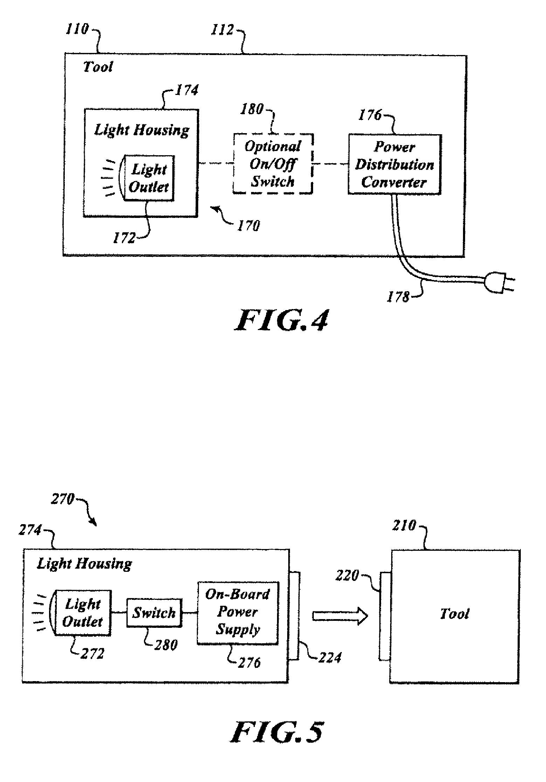

With reference now to Fig. 4, a handheld power tool 110 according to additional features is shown. The power tool 110 can generally define a tool housing 112. While not specifically shown in Fig. 4, the power tool 110 can generally take the form of the handheld power tool 10 described above with respect to Fig. 1. It is appreciated that while specific components shown in the power tool 10 of Fig. 1 have been omitted in the illustration of the power tool 110 of Fig. 4 that they are simply omitted for clarity purposes.

The power tool 110 can comprise a light source 170 having a light outlet 172. The light source 170 having the light outlet 172 can be generally provided as part of a light housing 174. The light source 170 can be configured to emit UV light as described above with respect to the light source 170. The power tool 110 can further comprise a power distributor/converter that can convert alternating current (AC) from a power cord 178 into usable power for the power tool 110. According to the example shown in Fig. 4, the power tool 110 can include an on/off switch 180. The on/off switch 180 can be turned to an "on" position to communicate electrical power from the power distributor/converter 176 to the light source 170. In one example, the light source 170 can be powered by the same source as other components (i.e., the motor) of the power tool 110. As can be appreciated, by turning the on/off switch 180 to an "off" position, a user can disable power communication to the light source 170 when the light source 170 is not needed. It is appreciated that while the power tool 110 has been shown with a standard AC power cord 178, the power tool 110 can alternatively be powered by an onboard power source, such as batteries, for example.

Turning now to Fig. 5, a handheld power tool 210 will be described in cooperation with a portable light source 270. Again, it is appreciated that the power tool 210 can be configured similar to the power tool 10 illustrated in Fig. 1. In this way, features shown and described above with respect to the power tool 10 (or machines 310, 410) can likewise be included on the power tool 210 of Fig. 5. According to the example shown in Fig. 5, the power tool 210 can include a receiving member 220 that can selectively couple with an attachment member 224 defined on a light housing 274 of the light source 270. The light source 270 can be configured to transmit UV light, such as described above in relation to the power tools 10 and 110 described above. The light source 270 according to the example of Fig. 5 can be a self-contained light source having an onboard power supply 276 (such as batteries for example) electrically coupled to an on/off switch 280 provided on the light housing 274. The light source 270 can define a light outlet 272 for emitting UV light onto a workpiece.

The receiving member 220 and attachment member 224 can take various forms. In one example, the receiving member 220 and the attachment member 224 can comprise a combination of fasteners that are configured to selectively mate with complementary features for securing the light source 270 to the tool 210. It is appreciated that the receiving member 220 and the attachment member 224 can take on other forms, such as, but not limited to, magnets. It is contemplated that the receiving member 220 can be arranged such that when the attachment member 224 is coupled with the receiving member 220, the light outlet 272 is aligned for emitting the UV light onto the work area (i.e., work area 76, Fig. 1). According to other features, it is contemplated that the light outlet 272 can be adjustable, such that a user can alter the direction of emitted light from the light outlet 272. It is also contemplated that the light source 70 (Fig. 1) and the light source 170 (Fig. 4) can also include an adjustable light outlet 72 and 172, respectively, such that a user can adjust the direction that the light is emitted onto in the work area 76 of the workpiece 56.

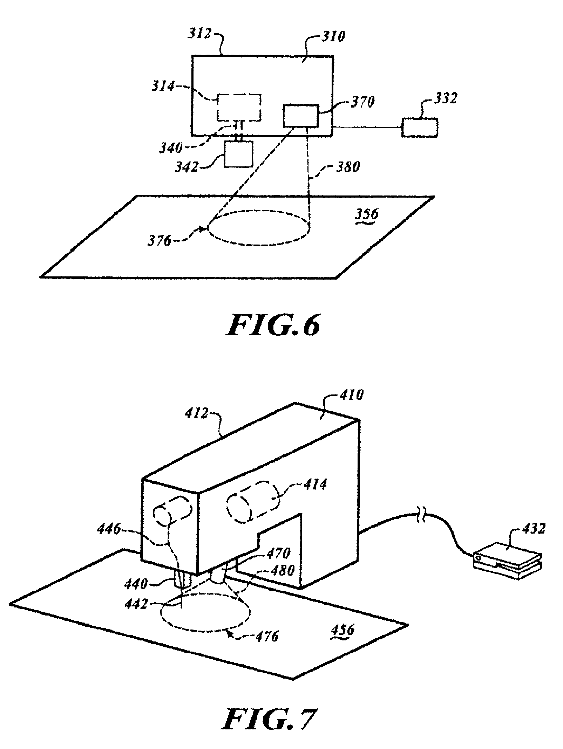

Turning now to Fig. 6, a machine constructed in accordance with additional features of the present teachings is shown and generally identified at reference numeral 310. The machine 310 can generally comprise a machine housing 312 containing a drive mechanism 314. An input member 332 can be coupled to the housing 312. An output member 340 can be driven by the drive mechanism 314 in response to an input from the input member 332 and provide a resultant motion onto a working member 342. The machine 310 can further comprise a light source 370 operable to shine a light out of the light source 370 and onto a work area 376 of a workpiece 356. The light source 370 can emit a generally wide beam 380 of UV light onto the work area 376 of the workpiece 356. By way of example, the machine 310 can comprise any machine used to perform a task on a workpiece. More particularly, the machine 310 can comprise any machine used to manipulate (i.e., cut, drill, grind, join, sew, weld, etc.) a workpiece 356 (including multiple workpieces concurrently) where an operator may follow a path identified on the workpiece 356 (markings, etc) with the working member 342. In this way, the working member can include, for example, a blade, a bit, a grinding wheel, a needle, other cutting instruments or joining instruments, and others. The drive mechanism 314 can comprise a motor such as described above with respect to the motor 14. The drive mechanism 314 can also comprise non-motorized devices such as hand operated devices or other apparatus that can impart motion onto an output member 340.

Turning now to Fig. 7, a sewing machine 410 constructed in accordance to one example of the present teachings is shown. The sewing machine 410 can generally comprise a sewing machine housing 412 having a drive mechanism 414 in the form of a motor. An input member 432 can be coupled to the sewing machine 410 for providing a signal to the drive mechanism 414. The input member 432 according to one example can comprise a foot pedal. The drive mechanism 414 can drive an output member 440 such as a needle holder. The output member 440 can selectively retain a working member such as a needle 442. As can be appreciated, the needle 442 can be adapted to carry a flexible member such as a thread 446. As can be appreciated, repeatedly passing the needle 442 through a workpiece 456 can secure the flexible member 446 to the workpiece 456 along a path. A light source 470 can project light onto the workpiece 456. The light source 470 can emit a generally wide beam 480 of UV light onto a work area 476 of the workpiece 456. The exemplary workpiece 456 of Fig. 7 can be any material suitable for sewing such as, but not limited to fabric, textiles or leather for example. The sewing machine 410 can further comprise a power distributor/converter that can convert alternating current (AC) from a power cord into usable power as described above in relation to the power tool 110 in Fig. 4.

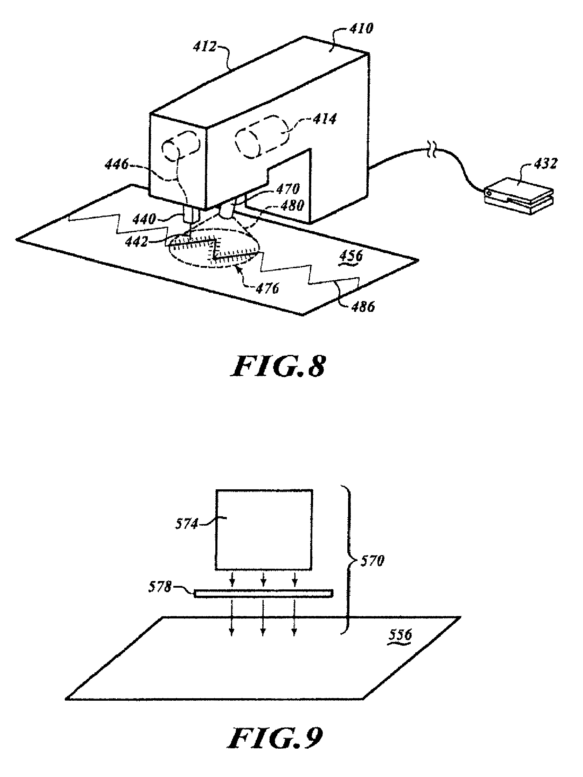

With continued reference to Fig. 7 and additional reference now to Fig. 8, the machine 410 and an exemplary method of using the machine 410 will be described in greater detail. A writing instrument (such as the writing instrument 84 described above and shown in Fig. 2) can be used for drawing markings 486 onto the workpiece 456. In one example, a user can draw the markings 486 onto the workpiece 456 to identify a desired sewing line. Those skilled in the art will appreciate that the sewing line 486 may be identified along a single workpiece (a single piece of material such as fabric) or can alternatively represent a line indicating where multiple pieces of material will be joined by the thread 446 during a sewing operation. As with the examples described above, the light source 470 can be adapted to transmit UV light onto the surrounding work area 476 rather than simply project a line of light, such as provided by a laser, for example. By shining light onto an area, the UV light can shine on markings that are within the work area 476. As shown in Fig. 8, the machine 410 is shown sewing along the marking 486 of the workpiece 456. The beam 480 of the light source 470 illuminates the markings 486 by way of the UV light. As described above, the UV light can transmit radiation prompting visible effects of fluorescence and phosphorescence. Also as described above, the UV light will cause the markings 486 to illuminate significantly relative to the remainder of the work area 476 (i.e., areas without the markings 486, but within the work area 476).

Turning now to Fig. 9, a light source 570 according to additional features of the present teachings is shown. The light source 570 can be collectively defined by a light emitting device 574 and a filter 578. The light emitting device 574 can include any light source, such as an incandescent bulb, a light emitting diode, a fluorescent bulb or others that is capable of emitting at least partially a percentage of UV light. Explained differently, the light source 570 can be configured to emit a percentage of black light and a remaining percentage of other light. The filter 578 can be a black light filter or other filter that is operable to filter out visible light (i.e., other light identified above) and only allow black light to pass through. The light source 470 can be substituted for any of the light sources 70, 170, 270 or 370 described herein.

While specific aspects have been described in the specification and illustrated in the drawings, it will be understood by those skilled in the art that various changes can be made and equivalents can be substituted for elements and components thereof without departing from the scope of the present teachings, as defined in the claims. Furthermore, the mixing and matching of features, elements, components and/or functions between various aspects of the present teachings are expressly contemplated herein so that one skilled in the art will appreciate from the present teachings that features, elements, components and/or functions of one aspect of the present teachings can be incorporated into another aspect, as appropriate, unless described otherwise above. Moreover, many modifications may be made to adapt a particular situation, configuration or material to the present teachings without departing from the essential scope thereof. Therefore, it is intended that the present teachings not be limited to the particular aspects illustrated by the drawings and described in the specification as the best mode presently contemplated for carrying out the present teachings, but that the scope of the present teachings include many aspects and examples following within the foregoing description and the appended claims.

The foregoing description of the embodiments has been provided for purposes of illustration and description. It is not intended to be exhaustive or to limit the invention. Individual elements or features of a particular embodiment are generally not limited to that particular embodiment, but, where applicable, are interchangeable and can be used in a selected embodiment, even if not specifically shown or described. The same may also be varied in many ways. Such variations are not to be regarded as a departure from the invention, and all such modifications are intended to be included within the scope of the invention.

## Claims

1. A machine (10, 110, 210, 310, 410) **characterized in that** it includes:
a machine housing (12, 112, 312, 412);
a drive mechanism (14, 314, 414) disposed in the machine housing and driving an output member (40, 340, 440);
an input member (32, 332, 432) associated with the machine housing for activating the drive mechanism;
a working member (42, 342, 442) driven by the output member; and
a light source (70, 170, 270, 370, 470, 570) coupled to the machine housing that projects UV light onto an area proximate to the working member.

2. The machine of claim 1 wherein the light source comprises a UV light source.

3. The machine of claim 1 wherein the light source collectively defines a light emitting device (574) and a filter (578), wherein the filter allows black light to pass therethrough.

4. The machine of claim 3 wherein the light emitting device comprises one of an incandescent bulb, a light emitting diode and a fluorescent bulb.

5. The machine of claim 1, further comprising a writing instrument (84) operable to place markings onto a workpiece (56, 356, 456), the markings corresponding to a working pattern and wherein the UV light illuminates the working pattern relative to the area proximate to the working member.

6. The machine of claim 1 wherein the light source is disposed on the machine housing generally proximate to the working member.

7. The machine of claim 6 wherein the light source is powered by a power source (276) internal to the machine housing.

8. The machine of claim 7 wherein the light source is powered by a common power source (178) as the drive mechanism.

9. The machine of claim 8, further comprising a switch (180) to selectively electrically connect the light source to the common power source.

10. The machine of claim 6 wherein the light source is disposed in a light housing (274) that is portable and comprises an internal power source.

11. The machine of claim 1 wherein the machine comprises a sewing machine (410).

12. The machine of claim 11 wherein the working member comprises a needle (442).

13. The machine of claim 12 wherein the input member comprises a foot pedal (432).

14. A method of manipulating a workpiece (56, 356, 456) with a machine (10, 110, 210, 310, 410), the method comprising:
marking a pattern onto the workpiece with a writing instrument (84);
activating a UV light source (70, 170, 270, 370, 470, 570) associated with the workpiece, the UV light source emitting light that makes the markings of the pattern appear optically brighter relative to the surrounding areas of the workpiece in range of the emitted light; and
manipulating the workpiece with a working member (42, 342, 442) on the machine while directing the working member substantially along the markings.

15. The method of claim 14 wherein the working member includes a needle (442) and manipulating the workpiece includes repeatedly passing the needle through the workpiece to secure a flexible member (446) carried by the needle substantially along the markings.
